**Europäisches Patentamt**

**European Patent Office**

**Office européen des brevets**

(19)

(11) Numéro de publication : **0 374 070 B1**

(12)

# FASCICULE DE BREVET EUROPEEN

(45) Date de publication du fascicule du brevet :
**02.12.92 Bulletin 92/49**

(51) Int. Cl.⁵ : **F16B 21/08, F16L 5/00**

(21) Numéro de dépôt : **89460043.6**

(22) Date de dépôt : **13.12.89**

(54) **Dispositif de fixation d'un élément destiné à traverser une cloison.**

(30) Priorité : **16.12.88 FR 8816880**

(43) Date de publication de la demande :
**20.06.90 Bulletin 90/25**

(45) Mention de la délivrance du brevet :
**02.12.92 Bulletin 92/49**

(84) Etats contractants désignés :
**CH DE ES FR GB IT LI SE**

(56) Documents cités :
**DE-A- 2 226 315**
**FR-A- 2 001 535**
**FR-A- 2 012 796**
**FR-A- 2 295 287**

(56) Documents cités :
**FR-A- 2 486 176**
**GB-A- 1 599 743**
**GB-A- 2 181 179**
**US-A- 3 221 572**

(73) Titulaire : **LEGRIS SA**
**74 rue de Paris**
**F-35014 Rennes (FR)**

(72) Inventeur : **Belisaire, Daniel**
**2 avenue de la Hublais**
**F-35510 Cesson-Sevigne (FR)**

(74) Mandataire : **Dubreuil, Annie et al**
**Cabinet Ballot-Schmit, Immeuble Le Suffren,**
**23 rue des Peupliers**
**F-56100 Lorient (FR)**

Jouve, 18, rue Saint-Denis, 75001 PARIS

## Description

La présente invention concerne un dispositif de fixation d'un élément destiné à traverser une cloison, tel qu'un raccord, un interrupteur, un témoin lumineux, etc. Elle concerne plus particulièrement un tel dispositif de fixation associé à un raccord de liaison utilisé dans des circuits de fluides.

A l'heure actuelle, les éléments destinés à traverser des cloisons sont généralement pourvus d'un moyen de fixation à collerette et à écrou. La fixation de ces éléments dans la cloison nécessite de placer l'élément d'un côté de la cloison, et de serrer l'écrou de blocage de l'autre côté, ce qui n'est pas toujours pratique. Un dispositif selon le préambule de la revendication 1 est connu du document DE-A-2 226 315.

Un objet de l'invention consiste à prévoir un moyen de faciliter cette opération en la rendant possible par intervention d'un seul côté de la cloison, et automatique après enfoncement dans un trou percé dans la cloison.

Selon l'invention, un dispositif de fixation associé à un élément à monter dans une cloison, par enfoncement dans un trou de diamètre approprié percé dans la cloison, comporte les caractéristiques de la revendication 1.

L'invention sera mieux comprise à l'aide des explications qui vont suivre et des dessins joints, parmi lesquels :

la Fig. 1 est une vue de côté d'un raccord instantané pourvu d'un dispositif de fixation selon l'invention,

la Fig. 2 est une vue de bout, schématique, du raccord de la Fig. 1,

la Fig. 3a est une vue en coupe, schématique, selon la ligne III-III de la Fig. 2,

la Fig. 3b est une vue en coupe, identique pour l'essentiel à la Fig. 3a, mais montrant schématiquement le dispositif de fixation en situation de fonctionnement,

la Fig. 4 est une vue de côté d'un dispositif de fixation selon l'invention, formant une pièce séparée,

la Fig. 5 est une vue en coupe selon la ligne V-V de la Fig. 4,

la Fig. 6 est une vue en coupe de l'élément de la Fig. 4, selon une ligne correspondant à la ligne VI-VI de la Fig. 5,

la Fig. 7 est une vue en coupe de l'élément de la Fig. 4 selon une ligne correspondant à la ligne VII-VII de la Fig. 5.

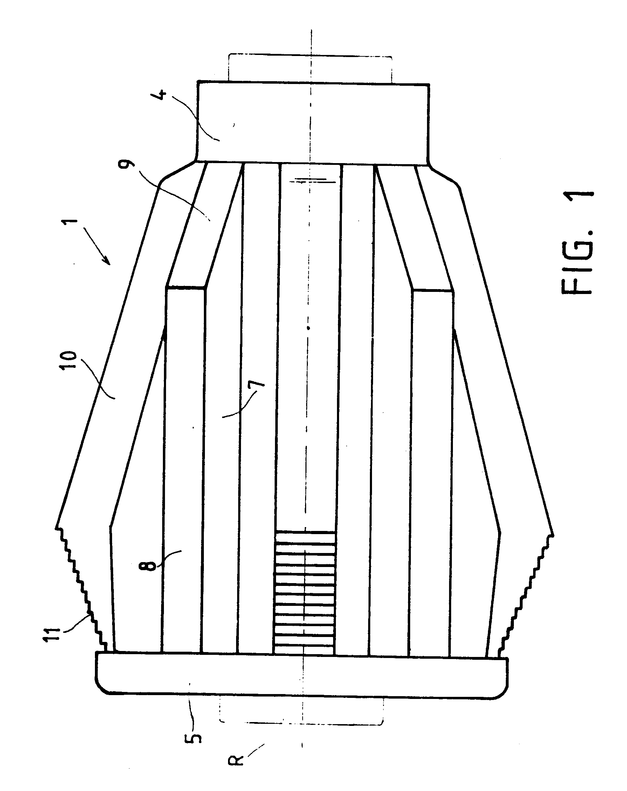

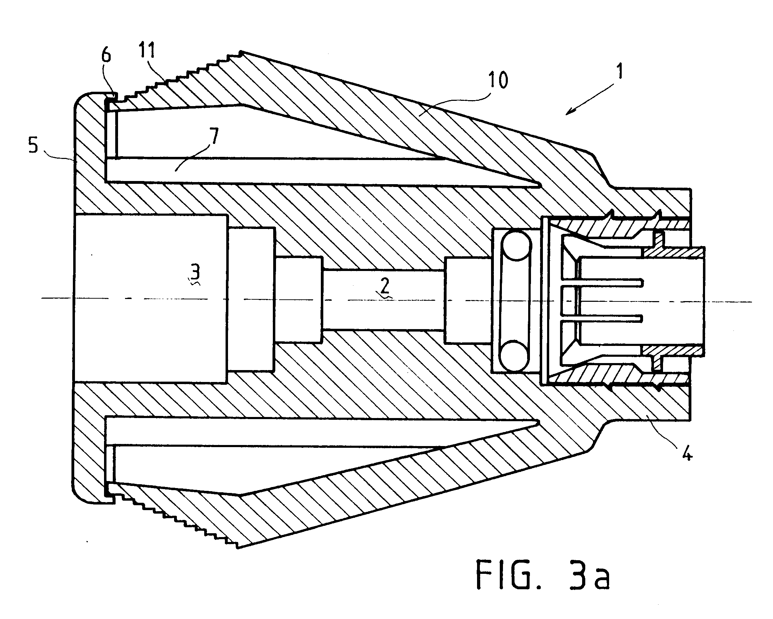

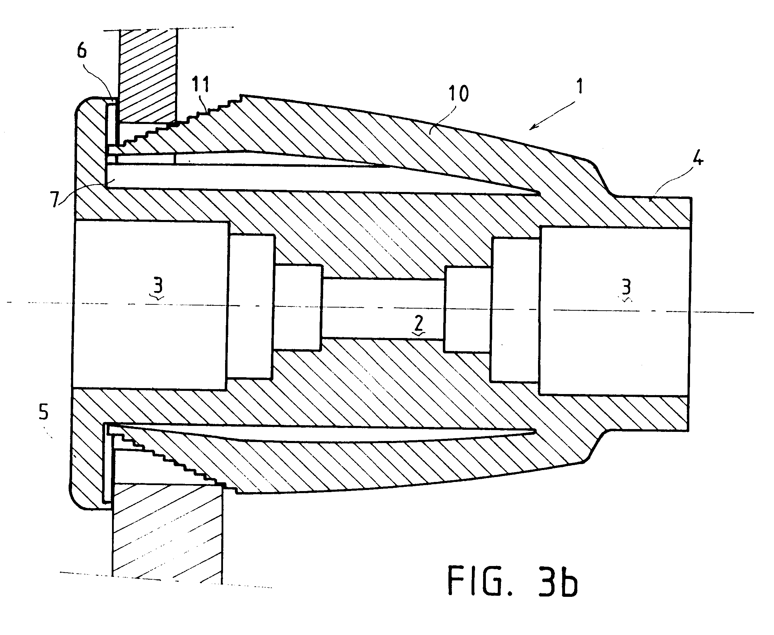

Le raccord de liaison 1 représenté aux Figs. 1 à 3 est prévu pour le passage à travers une cloison d'une canalisation de circuit de fluide. Comme on le voit à la Fig. 3, l'intérieur du raccord 1 comporte classiquement un canal médian 2 communiquant de chaque côté avec des alésages cylindriques étagés 3, ouverts aux extrémités du raccord, et renfermant des moyens de raccordement étanche R, Fig. 1, pour des tuyaux non montrés.

Dans l'exemple de réalisation illustré, les alésages 3 sont destinés à recevoir des moyens de raccordement instantanés étanches du type décrit dans le brevet français n° 2 012 796 au nom de la présente demanderesse, ces moyens étant représentés schématiquement à la Fig. 3a.

Le raccord 1 comprend une partie cylindrique 4 dont une extrémité est pourvue d'une collerette 5 de diamètre sensiblement plus important. La collerette 5 présente un rebord périphérique 6 orienté longitudinalement vers l'autre extrémité du raccord.

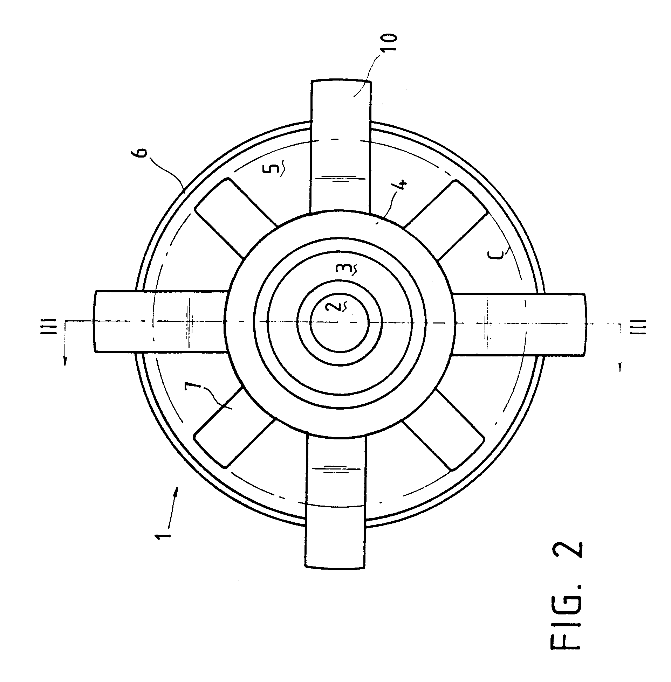

Quatre ailettes longitudinales 7 font saillie radialement sur la partie cylindrique 4, à partir de la collerette 5. Les ailettes 7 sont régulièrement réparties sur le pourtour du raccord et, comme le montre la Fig. 1, elles ont un profil trapézoïdal, leur sommet 8 étant parallèle à l'axe longitudinal du raccord et leur côté 9 opposé à la collerette 5 étant incliné. Les sommets 8 des ailettes 7 s'inscrivent dans une circonférence C, Fig. 2, centrée sur l'axe longitudinal du raccord 1, et dont le diamètre est très légèrement inférieur au trou à percer dans la cloison pour la réception du raccord 1.

Le raccord 1 comporte en outre quatre pattes longitudinales 10, régulièrement réparties à sa périphérie, entre les ailettes 7. Chaque patte 10 est solidaire à une extrémité de la partie cylindrique 4 du raccord, près de l'extrémité éloignée de la collerette 5. A partir de cette extrémité, la patte 10 est dirigée obliquement vers l'extérieur, de manière à faire saillie radialement, à une certaine distance, au-delà de la circonférence C dans laquelle s'inscrivent les sommets 9 des ailettes 7, puis au-delà de la circonférence de la collerette 5. D'autre part, la face externe de la partie d'extrémité des pattes 10, adjacente à la collerette 5, est découpée en gradins transversaux 11, de telle sorte que chaque groupe de niveaux correspondants des quatre pattes 10 forme un épaulement circulaire interrompu dirigé vers la collerette 5. Les pattes 10 ont leurs extrémités libres qui affleurent la collerette 5, à l'intérieur du rebord 6, et au repos, elles sont sollicitées contre ledit rebord 6, sous l'effet de leur élasticité. Dans une autre forme de réalisation, la collerette 5, avec ou sans rebord 6, est interrompue au niveau des pattes 10 dont les extrémités libres dépassent assez nettement vers l'extérieur audelà de la collerette 5. Cette réalisation permet d'obtenir un meilleur rappel élastique des pattes 10 en fonctionnement. A la collerette 5, peut alors être associé un capuchon annulaire ayant une fonction d'enjoliveur. Dans tous les cas, un tel capot pourra assurer une fonction de signalisation, déterminée par le choix de sa couleur, par exemple.

Lors de la mise en place, quand le raccord 1 est introduit par son extrémité éloignée de la collerette 5 dans un trou de réception percé dans une cloison, il est d'abord guidé par les côtés inclinés 9 des ailettes 7, puis il est centré et stabilisé latéralement par les sommets 8 desdites ailettes. Pendant ce temps, les pattes 10 se referment par élasticité en se rapprochant de la partie cylindrique 4 et se déploient à nouveau partiellement, toujours par élasticité, jusqu'à ce que le bord du trou dans la cloison soit pris entre la collerette 5 et le groupe de niveaux correspondants 11 des pattes 10 dont l'écartement longitudinal avec le bord périphérique 6 de la collerette 5 est le plus voisin, supérieurement, de l'épaisseur de la cloison. Dans cette position, le manchon 1 est stabilisé latéralement dans le trou par les sommets 8 des ailettes 7 et il est bloqué longitudinalement par la collerette 5 et les pattes 10. Deux telles situations pour deux épaisseurs de cloison différentes sont respectivement illustrées par les parties supérieure et inférieure de la Fig. 3b.

Bien entendu, la découpe en gradins des extrémités des pattes 10 sera prévue telle que les écartements longitudinaux entre les différents groupes de niveaux 11 et le bord 6 de la collerette 5 soient très voisins, supérieurement, des épaisseurs de cloisons les plus usuelles. Par ailleurs, la collerette 5 pourra être pourvue, sur sa face interne, d'un élément annulaire compressible et élastique dans le but d'absorber tout jeu longitudinal du raccord par rapport à la cloison. Ceci sera particulièrement important dans des applications où le raccord est susceptible d'être soumis à des vibrations. L'élément compressible pourra être un anneau torique souple collé au rebord 6, par exemple, ou le rebord 6 lui-même si les caractéristiques d'élasticité de la matière utilisée pour la fabrication du raccord le permettent. Le rebord 6 pourra alors être interrompu, de manière à avoir davantage de souplesse.

De plus, bien que sur les dessins, on ait représenté un raccord 1 en état de non-fonctionnement dont les différents niveaux 11 de gradins sont dans des plans transversaux, il est préférable de prévoir ceux-ci légèrement inclinés par rapport à la direction transversale, de façon que lorsqu'ils sont opérationnels, les pattes étant partiellement refermées, ils se trouvent alors effectivement dans des plans transversaux.

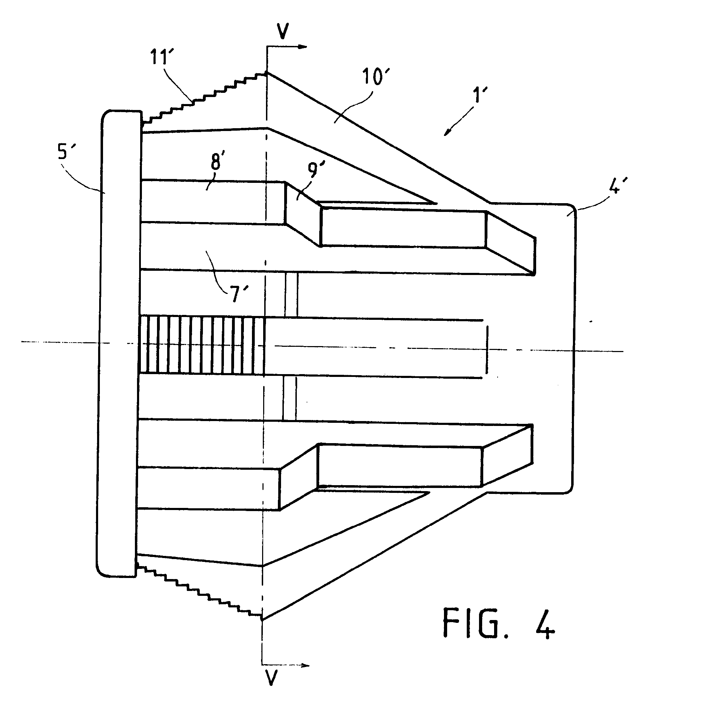

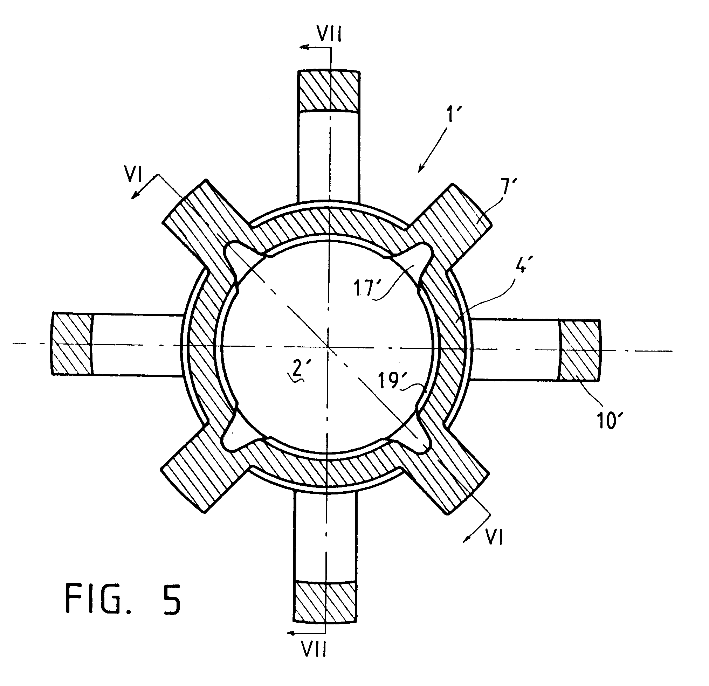

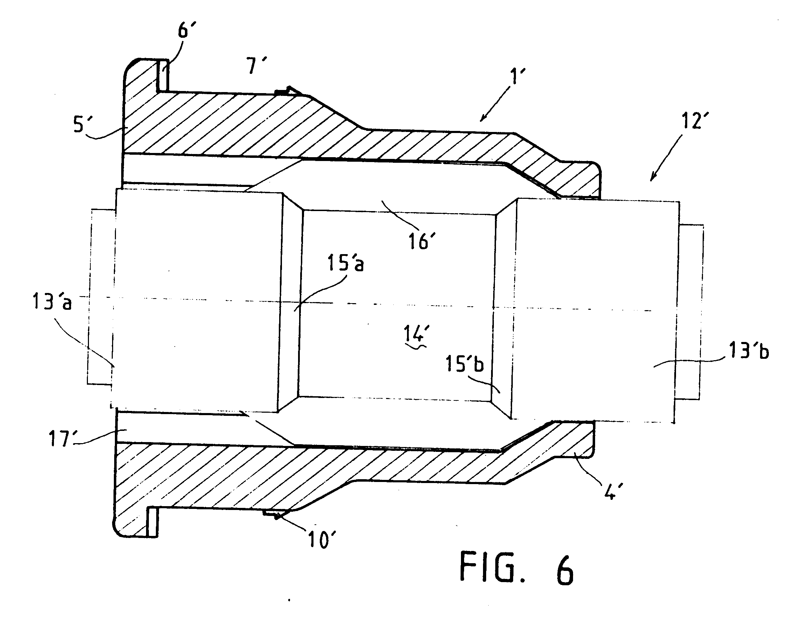

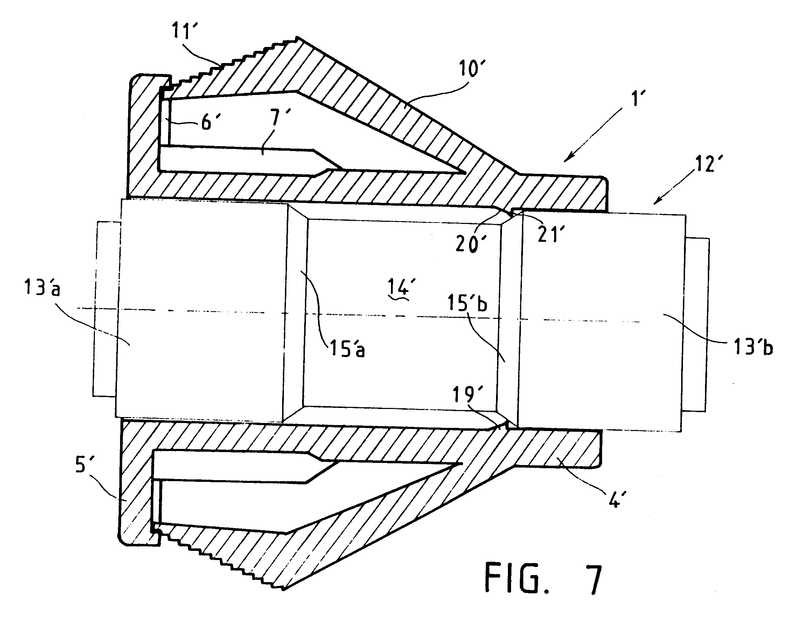

Le manchon 1' représenté aux Figs. 4 à 7 est un moyen de fixation autonome, comportant un logement interne 2', Fig. 5, pour un raccord de liaison classique dont le profil est schématiquement représenté dans les vues en coupe des Figs. 6 et 7.

Le corps du manchon présente une partie 4' de forme générale cylindrique, une collerette 5' avec un rebord 6', des ailettes 7' et des pattes 10'. Ces éléments sont sensiblement identiques aux éléments correspondants du raccord des Figs. 1 à 3 et fonctionnent de la même façon, raison pour laquelle on ne les décrira pas en détail.

Extérieurement, le raccord de liaison 12' auquel est destiné le manchon 1', et dont le profil apparaît schématiquement aux Figs. 6 et 7, présente deux parties terminales cylindriques identiques 13'a et 13'b unies à une partie cylindrique médiane 14' de moindre diamètre en formant respectivement des épaulements annulaires en chanfrein 15'a et 15'b. Autour de la partie médiane 14', sont régulièrement réparties quatre ailettes longitudinales 16' dont les extrémités sont obliques et prennent naissance sur chaque partie cylindrique terminale 13'a et 13'b.

Le logement interne 2' est un canal cylindrique ouvert à ses deux extrémités, de diamètre très légèrement supérieur à celui des parties cylindriques terminales 13'a et 13'b du raccord 12'. Sa surface présente quatre gorges longitudinales 17' régulièrement réparties, ouvertes à l'extrémité du manchon comportant la collerette 5'. De l'autre côté, les gorges 17' s'arrêtent avant l'extrémité du manchon, leur fond étant incliné pour former une extrémité oblique 18'. En pratique, les gorges 17' sont prévues dans la même position angulaire que les ailettes 7' de façon à ne pas rendre nécessaires des surépaisseurs spécifiques de la partie cylindrique 4' du manchon. Les gorges 17', destinées à recevoir les ailettes 16' du raccord 12', ont un profil complémentaire de celui des ailettes.

Dans le voisinage et en-deçà des extrémités inclinées 18' des gorges 17', une nervure circulaire transversale 19' fait saillie à la surface du logement 2'. La nervure 19' est bien-sûr interrompue en quatre endroits par les gorges 17', et sa section est triangulaire, comme le montre la Fig. 7, son côté 20' orienté vers l'ouverture adjacente à la collerette 5' étant incliné et son autre côté 21' étant droit. La circonférence interne définie par l'arête de la nervure 19' a un diamètre légèrement inférieur à celui des parties terminales 13' du raccord 12'.

En utilisation, le raccord 12' est inséré dans le manchon 1' avant ou après que ce dernier ait été fixé dans une cloison, exactement de la même façon que l'élément 1 des Figs. 1 à 3. Le raccord 12' est introduit par sa partie terminale 13'b, Figs. 6 et 7, dans le logement 2' par l'ouverture du manchon adjacente à la collerette 5', chaque ailette 16' pénétrant dans une gorge 17'. A un certain moment, la partie terminale 13'b à l'intérieur du logement 2' arrive en butée sur le bord incliné de la nervure 2'. Sous l'effet d'une pression d'enfoncement augmentée sur l'extrémité de l'autre partie terminale 13'a, le raccord 12' continue à progresser dans le manchon 1', la nervure 19' étant aplatie par la surface externe de la paroi cylindrique 13'. Puis, juste avant que les ailettes 16' arrivent en butée contre l'extrémité oblique 18' des gorges 17', l'épaulement en chanfrein 15'b adjacent à la partie 13'b du raccord 12' arrive au niveau de la nervure 19', de sorte que celle-ci se redresse du fait de sa propre élasticité, pour former une butée en contact avec ledit chanfrein quand les ailettes 16' atteignent l'extrémité 18' des gorges 17'. Par conséquent, le raccord 12' se trouve verrouillé dans le manchon 1', bloqué en rotation par les ailettes 16' dans les gorges 17', et longitudinalement dans les deux sens, par les ailettes 16' en butée contre les extrémités 18' des gorges 17', d'une part, et par la nervure 19' en butée sur l'épaulement en chanfrein 15'b, d'autre part.

Dans une autre forme de réalisation, le corps cylindrique du manchon présente des fentes longitudinales ouvertes à l'extrémité opposée à la collerette. Un moyen de verrouillage interne, consistant en une nervure périphérique, est associé à ces fentes pour permettre l'insertion de l'élément à fixer dans le manchon, ou son extraction, par l'extrémité opposée à la collerette.

Le dispositif de l'invention, qu'il soit intégré à l'élément à fixer, ou bien qu'il forme une pièce séparée, est fabriqué, avantageusement, par moulage de matières plastiques présentant des caractéristiques d'élasticité appropriées.

De plus, bien qu'ici, le dispositif de l'invention ait été décrit associé à un raccord de liaison, on comprendra qu'il peut être utilisé avec toutes sortes d'éléments devant être fixés dans le corps d'une cloison, tels que des organes de commande, des interrupteurs, des témoins lumineux, etc.

## Revendications

1. Dispositif de fixation associé à un élément à monter dans une cloison, par enfoncement dans un trou de diamètre approprié percé dans la cloison, lequel dispositif comporte un corps longitudinal (4; 4') et, sur celui-ci, un moyen de blocage longitudinal consistant, d'une part, en une collerette (5; 5') et, d'autre part, en des parties périphériques en saillie vers l'extérieur, escamotables élastiquement vers l'intérieur, et présentant une découpe en gradins (11; 11') pour former ensemble une succession d'épaulements périphériques circulaires interrompus, orientés vers la collerette (5, 5'), de sorte que lors de l'enfoncement dans le trou, lesdites parties périphériques s'effacent puis ressortent partiellement, le bord du trou se trouvant pris entre la collerette (5, 5') et l'épaulement formé par lesdites parties périphériques dont l'écartement longitudinal avec la collerette (5; 5') est le plus voisin, supérieurement, de l'épaisseur de la cloison, permettant ainsi une fixation automatique dans des cloisons de différentes épaisseurs, caractérisé en ce qu'il comporte en outre, sur le pourtour du corps longitudinal (4; 4') entre lesdites parties périphériques à gradins, des ailettes longitudinales (7; 7') adjacentes par une de leurs extrémités à la collerette (5; 5'), dont les sommets s'inscrivent dans une circonférence (C) de diamètre inférieur à ceux des différents épaulement circulaires interrompus formés par lesdites parties périphériques à gradins, lesdites ailettes constituant des moyens de centrage et de stabilisation latérale dans le trou de réception dans la cloison, et délimitant d'autre part entre elles et autour du corps (4; 4') des espaces dans lesquels pénètrent lesdites parties périphériques gradins lors de l'enfoncement du dispositif.

2. Dispositif selon la revendication 1, caractérisé en ce que les extrémités (9; 9') éloignées de la collerette (5; 5') des ailettes (7; 7') sont obliques pour guider le centrage lors de l'enfoncement.

3. Dispositif selon la revendication 1 ou 2, caractérisé en ce que lesdites parties périphériques sont des pattes longitudinales élastiques (10; 10') dont les extrémités éloignées de la collerette (5; 5') sont solidaires du corps longitudinal (4; 4'), et dont les extrémités libres présentent ladite découpe en gradins (11; 11').

4. Dispositif selon l'une des revendications 1 à 3, caractérisé en ce qu'il est intégré à l'élément à fixer (1), le corps (4) étant constitué par la partie périphérique dudit élément (1).

5. Dispositif selon la revendication 4, caractérisé en ce que ledit élément (1) est un raccord de tubes pour fluides.

6. Dispositif selon l'une des revendications 1 à 4, caractérisé en ce que le corps longitudinal (4') forme un manchon dont l'intérieur (2') comporte des moyens de guidage et de verrouillage de l'élément à fixer.

7. Dispositif selon la revendication 6, caractérisé en ce que l'élément à fixer est un raccord (12') formé de deux parties terminales cylindriques (13'a, 13'b) séparées d'une partie centrale (14') par deux surfaces annulaires en chanfrein (15'a, 15'b), et présentant des ailettes longitudinales périphériques (16'), et en ce que lesdits moyens de guidage et de verrouillage consistent en des gorges longitudinales (17') de réception des ailettes (16') et en une nervure (19') de section triangulaire susceptible de s'effacer lors de l'insertion de l'élément (12') dans le manchon et de former une butée agissant contre l'une des surfaces en chanfrein (15'a, 15'b) lorsque les ailettes (16') sont en butée au fond des gorges (17').

8. Dispositif selon la revendication 6, caractérisé en ce que le corps cylindrique (4') présente des fentes longitudinales ouvertes à l'extrémité opposée à la collerette (5'), de façon à permettre l'insertion ou l'extraction de l'élément à fixer par l'extrémité du manchon opposée à la collerette (5′).

9. Dispositif selon l'une des revendications 1 à 8, caractérisé en ce qu'à la collerette (5; 5′), est associé un capuchon annulaire ayant une fonction d'enjoliveur et/ou de signalisation.

10. Dispositif selon l'une des revendications 1 à 9, caractérisé en ce que la collerette (5; 5′) est pourvue sur sa face interne d'un élément annulaire souple pour absorber tout jeu longitudinal par rapport à la cloison sur laquelle il est placé.

**Patentansprüche**

1. Vorrichtung, die einem in einer Wand anzubringenden Element zugeordnet ist und die durch Eintreiben in ein in die Wand gebohrtes Loch geeigneten Durchmessers zu befestigen ist, welche Vorrichtung einen langgestreckten Körper (4; 4′) und, auf diesem, eine Einrichtung zur Blockierung in Längsrichtung aufweist, die einerseits aus einem Bund (5; 5′) und andererseits aus nach außen vorspringenden Umfangsteilen besteht, die elastisch nach innen ausweichen können und eine gestufte Schnittfläche (11; 11′) aufweisen, um gemeinsam eine Folge unterbrochener kreisförmiger Umfangsschultern zu bilden, die zum Bund (5, 5′) hin orientiert sind, damit beim Eintreiben in das Loch die genannten Umfangsteile zurücktreten und dann wieder teilweise zurückfedern, wobei der Rand des Lochs zwischen dem Bund (5, 5′) und der Schulter eingeschlossen wird, die durch diejenigen Umfangsteile gebildet wird, deren Längsabstand zum Bund (5; 5′) von oben her der Dicke der Wand am nächsten kommt, was ein automatisches Befestigen in Wänden unterschiedlicher Dicke erlaubt, dadurch gekennzeichnet, daß sie ferner auf dem Umfang des langgestreckten Körpers (4; 4′) zwischen den genannten gestuften Umfangsteilen Längsstege (7; 7′) aufweist, die mit jeweils einem ihrer Enden an den Bund (5; 5′) stoßen und deren Scheitel in einen Umfang (C) eingeschrieben sind, dessen Durchmesser geringer ist als die Durchmesser der verschiedenen unterbrochenen kreisförmigen Schultern, die durch die genannten gestuften Umfangsteile gebildet werden, welche Stege eine Einrichtung zum Zentrieren und Querstabilisieren im Aufnahmeloch in der Wand bilden und die andererseits zwischen sich und um den Körper (4; 4′) Räume abgrenzen, in die die genannten gestuften Umfangsteile beim Eintreiben der Vorrichtung eindringen.

2. Vorrichtung nach Anspruch 1, dadurch gekennzeichnet, daß die vom Bund (5; 5′) entfernten Enden (9; 9′) der Stege (7; 7′) abgeschrägt sind, um die Zentrierung beim Eintreiben zu führen.

3. Vorrichtung nach einem der Ansprüche 1 oder 2, dadurch gekennzeichnet, daß die Umfangsteile elastische Längsleisten (10; 10′) sind, deren vom Bund (5; 5′) entfernte Enden mit dem langgestreckten Körper (4; 4′) verbunden sind und deren freie Enden die genannte gestufte Schnittfläche (11; 11′) aufweisen.

4. Vorrichtung nach einem der Ansprüche 1 bis 3, dadurch gekennzeichnet, daß sie in das zu befestigende Element (1) integriert ist, wobei der Körper (4) durch den Umfangsteil des genannten Elements (1) gebildet wird.

5. Vorrichtung nach Anspruch 4, dadurch gekennzeichnet, daß das Element (1) ein Anschluß für Fluidrohre ist.

6. Vorrichtung nach einem der Ansprüche 1 bis 4, dadurch gekennzeichnet, daß der langgestreckte Körper (4′) einen Stutzen bildet, dessen Inneres (2′) Einrichtungen zum Führen und Verriegeln des zu befestigenden Elementes trägt.

7. Vorrichtung nach Anspruch 6, dadurch gekennzeichnet, daß das zu befestigende Element ein Anschluß (12′) ist, der durch zwei zylindrische Endteile (13′a, 13′b) gebildet wird, die durch einen Mittenteil (14′) mit zwei abgeschrägten ringförmigen Flächen (15′a, 15′b) voneinander getrennt werden und die langgestreckte Umfangsstege (16′) aufweisen, und daß die genannten Einrichtungen zum Führen und Verriegeln Längsnuten (17′) zum Aufnehmen der Stege (16′) und eine Rippe (19′) mit dreieckigem Querschnitt aufweisen, die beim Einschieben des Elements (12′) in den Stutzen zurücktreten kann und die einen Anschlag bilden kann, der gegen eine der abgeschrägten Flächen (15′a, 15′b) wirkt, wenn die Stege (16′) an den Boden der Nuten (17′) anstoßen.

8. Vorrichtung nach Anspruch 6, dadurch gekennzeichnet, daß der zylindrische Körper (4′) Längsschlitze aufweist, die zu dem von dem Bund (5′) abgewandten Ende offen sind, um das Einschieben oder das Herausziehen des zu befestigenden Elementes bezogen auf das dem Bund (5′) gegenüberliegende Ende des Stutzens zu erlauben.

9. Vorrichtung nach einem der Ansprüche 1 bis 8, dadurch gekennzeichnet, daß der Bund (5; 5′) mit einer ringförmigen Hülse versehen ist, der eine Dekor- und/oder Hinweisfunktion zukommt.

10. Vorrichtung nach einem der Ansprüche 1 bis 9, dadurch gekennzeichnet, daß der Bund (5; 5') auf seiner Innenseite mit einem nachgiebigen ringförmigen Element versehen ist, um jedes Längsspiel in bezug auf die Wand aufzufangen, gegen die es angelegt ist.

## Claims

1. A fastening device associated with an element to be secured in a partition wall by insertion into a hole with a suitable diameter provided in the partition wall, which device comprises a longitudinal body (4; and 4') and, on the latter, a longitudinal locking means consisting on the one hand of a flange (5; and 5') and on the other hand of circumferential parts projecting towards the outside and able to give way elastically towards the inside, and presenting cut steps (11; and 11') in order to together constitute a succession of circular circumferential interrupted shoulders, which are directed towards the flange (5 and 5') in such a manner that on insertion into the hole the said circumferential parts retreat and then partly return, the edge of the hole being located between the flange (5 and 5') and the shoulder constituted by the said circumferential parts, whose longitudinal spacing with the flange (5; and 5') is nearest, at a higher level, with respect to the thickness of the partition wall, thus permitting automatic fastening in partition walls of different thicknesses, characterized in that it comprises furthermore, on the peripheral part of the longitudinal body (4; and 4') between the said circumferential stepped parts, longitudinal wings (7; and 7') adjacent to the flange (5; and 5') at one of their ends, the tips thereof coinciding with a circumference (C) having a diameter less than those of the different interrupted circular shoulders constituted by the said circumferential stepped parts, the said wings constituting centering means and laterally steadying means in the receiving hole in the partition wall, and delimiting on the other hand, between them and around the body (4' and 4'), spaces into which the said circumferential parts having steps extend when the device is inserted.

2. The device as claimed in claim 1, characterized in that the ends (9; and 9') remote from the flange (5; and 5') of the wings (7' and 7') are oblique in order to ensure a guiding and centering action during insertion.

3. The device as claimed in claim 1 or claim 2, characterized in that the said circumferential parts are longitudinal elastic claws (10' and 10') whose ends remote from the flange (5; and 5') are fixed to the longitudinal body (4; and 4') and whose free ends have the said cut steps (11; and 11').

4. The device as claimed in any one of the preceding claims 1 through 3, characterized in that it is integrated with an element (1) to be secured, the body (4) being constituted by the circumferential part of the said element (1).

5. The device as claimed in claim 4, characterized in that the said element (1) is a connection for fluid tubes.

6. The device as claimed in any one of the preceding claims 1 through 4, characterized in that the longitudinal body (4') constitutes a sleeve whose inside (2') comprises guide and locking means for the element to be fastened.

7. The device as claimed in claim 6, characterized in that the element to be fastened is a connection (12') formed by two cylindrical end parts (13'a and 13'b) separated from a central part (14') by two annular surfaces with a bevel (15'a and 15'b) and presenting circumferential longitudinal wings (16') and in that the said guide and locking means consist of longitudinal grooves (17') for receiving the wings (16') and a rib (19') with a triangular cross section adapted to move out of the way during insertion of the element (12') into the sleeve and t constitute an abutment acting against one of the surfaces with a bevel (15'a and 15'b) when the wings (16') are in abutment with the bottom of the grooves (17').

8. The device as claimed in claim 6, characterized in that the cylindrical body (4') has longitudinal slots open at the end opposite to the flange (5') in such a manner as to permit the insertion or removal of the element to be fastened using the end of the sleeve opposite to the flange (5').

9. The device as claimed in any one of the preceding claims 1 through 8, characterized in that at the flange (5; and 5') there is an associated annular cap having the function of a decorative and/or indicating means.

10. The device as claimed in any one of the preceding claims 1 through 9, characterized in that on its inner surface the flange (5; and 5') is provided with an annular supple element in order to take up any longitudinal play in relation to the partition wall on which it is arranged.

FIG. 1

EP 0 374 070 B1

FIG. 2

EP 0 374 070 B1

EP 0 374 070 B1

FIG. 3a

FIG. 3b

EP 0 374 070 B1

FIG. 4

EP 0 374 070 B1

FIG. 5

EP 0 374 070 B1

FIG. 6

FIG. 7

EP 0 374 070 B1